# EUROPÄISCHE PATENTANMELDUNG

(11) **EP 3 667 119 A1**
(43) Veröffentlichungstag der Anmeldung: **17.06.2020**
(21) Anmeldenummer: 19215063.9
(22) Anmeldetag: 11.12.2019
(51) Int. Cl.: F16H 1/00, H02K 7/06, F16H 37/04, F16H 49/00, H02K 7/116

(54) **AKTUATOR**

(30) Priorität: 11.12.2018 LU 101034
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft einen Aktuator mit einem Elektromotor und mit mehreren, dem Elektromotor in Serie triebtechnisch nachgeschalteten Getrieben, von denen das letzte Getriebe in der Serie eine Abtriebswelle aufweist. Der Aktuator ist derart ausgebildet, dass der Elektromotor und die Getriebe vollständig in dem von einem Gehäuse des Aktuators umgebenen Bauraum mit einem Volumen V [mm³] angeordnet sind, wobei der Bauraum eine Höhe von h [mm] aufweist und wobei gilt V [mm³] = A [mm²] h [mm] und 5.000 mm² < A < 15.000 mm² und wobei die Rotationsachse des Rotors des Elektromotors senkrecht zur Richtung der Höhe h ausgerichtet ist und wobei der Außendurchmesser des Elektromotors in genauso groß ist, wie die Höhe h.

## Beschreibung

Die Erfindung betrifft einen Aktuator mit einem Elektromotor und mit mehreren, dem Elektromotor in Serie triebtechnisch nachgeschalteten Getrieben, von denen das letzte Getriebe in der Serie eine Abtriebswelle aufweist.

Aktuatoren der eingangs genannten Art sind in unterschiedlichen Bauformen bekannt.

Aus US 2005/0223832 A1 ist ein Aktuator zum Verstellen der Klappen einer Lüftung in einem Fahrzeug bekannt. Der Aktuator weist einen elektrischen Motor auf, der eine Spindel antreibt. Die Spindel ist Bestandteil eines Schneckenradgetriebes.

Es ist die Aufgabe der vorliegenden Erfindung, einen Aktuator anzugeben, der bei beengten Bauraumverhältnissen flexibel einsetzbar ist.

Die Aufgabe wird durch einen Aktuator gelöst, der dadurch gekennzeichnet ist, dass der Elektromotor und die Getriebe vollständig in dem von einem Gehäuse des Aktuators umgebenen Bauraum mit einem Volumen V [mm³] angeordnet sind, wobei der Bauraum eine Höhe von h [mm] aufweist und wobei gilt V [mm³] = A [mm²] h [mm] und 5.000 mm² < A < 15.000 mm² und wobei die Abtriebswelle senkrecht zur Richtung der Höhe ausgerichtet ist und wobei auch die Rotationsachse des Rotors des Elektromotors senkrecht zur Richtung der Höhe h ausgerichtet ist und wobei der Außendurchmesser des Elektromotors in Richtung der Höhe h genauso groß ist, wie die Höhe h.

Der erfindungsgemäße Aktuator hat den ganz besonderen Vorteil, dass er in beengten, insbesondere flachen Bauräumen flexibel für unterschiedliche Zwecke eingesetzt werden kann. Durch die besondere Ausbildung des erfindungsgemäßen Aktuators und insbesondere durch die besondere Ausrichtung der Abtriebswelle senkrecht zur Richtung der Höhe kann eine ganz besonders kompakte und insbesondere flache Bauform erzielt werden. Insbesondere hat der erfindungsgemäße Aktuator den ganz besonderen Vorteil, dass ein nachträgliches drehfestes Ankoppeln der Abtriebswelle in flachen und von anderen Bauteilen oder Wandungen begrenzten Bauräumen möglich ist, wobei der Bauraum, in den der Aktuator, insbesondere senkrecht zur Richtung der Höhe h, eingeführt werden kann, dennoch nur ganz geringfügig höher zu sein braucht, als die Höhe h des Aktuators. Insbesondere ist es beispielsweise möglich, den erfindungsgemäßen Aktuator stirnseitig in einen flachen Bauraum, der außer im Bereich der Einführöffnung nicht zugänglich ist, einzuschieben und gleichzeitig durch die Einschiebebewegung (beispielsweise über eine Steckverzahnung) eine drehfeste Ankopplung der senkrecht zur Richtung der Höhe ausgerichteten Abtriebswelle an eine Antriebswelle eines anzutreibenden Systems herzustellen.

Bei den angegebenen Größen wird davon ausgegangen, dass die Höhe h in Millimetern gemessen wird. Das Volumen wird in mm³ gemessen. A hat die Einheit mm².

Bei einer vorteilhaften Ausführung weist der Bauraum die Form eines Zylinders aufweist, der eine Grundfläche auf, wobei die Höhe senkrecht zur Grundfläche ausgerichtet ist und, wobei die Rotationsachse des Rotors des Elektromotors parallel zur Grundfläche ausgerichtet ist. Die Grundfläche kann eine beliebige, insbesondere an die jeweilige Anwendung angepasste, Form aufweisen. Insbesondere kann die Grundfläche rechteckig ausgebildet sein.

Die Grundfläche kann eben sein. Dies ist jedoch nicht zwingend erforderlich. Beispielsweise kann die Grundfläche auch eine Ausbuchtung, beispielsweise für einen Teil des Elektromotors und/oder des Spannungswellengetriebes, aufweisen. Insbesondere kann vorteilhaft vorgesehen sein, dass ein Teil des Elektromotors und/oder des Spannungswellengetriebe formschlüssig in die Ausbuchtung eingefügt ist.

Der Grundfläche gegenüberliegend kann eine zur Grundfläche parallele Deckelfläche angeordnet sein. Die Deckelfläche kann gleich oder spiegelsymmetrisch zur Grundfläche ausgebildet sein. Auch die Deckelfläche kann eine Ausbuchtung aufweisen. Insbesondere kann vorteilhaft vorgesehen sein, dass ein Teil des Elektromotors und/oder des Spannungswellengetriebes formschlüssig in die Ausbuchtung der Deckelfläche eingefügt ist.

Erfindungsgemäß ist die Abtriebswelle senkrecht zur Richtung der Höhe ausgerichtet ist.

Wie bereits erwähnt, kann vorteilhaft vorgesehen sein, dass die Grundfläche ein Rechteck ist. Insbesondere ist es jedoch auch möglich, dass die Grundfläche nicht eben ist, aber dennoch einen rechteckigen Umfangsrand aufweist.

Bei einer besonders kompakt ausbildbaren Ausführung sind die Seitenkanten des Rechtecks unterschiedlich lang und ist die Rotationsachse des Rotors des Elektromotors parallel zur längeren Seitenkante der Grundfläche ausgerichtet. Eine solche Ausführung nutzt den zur Verfügung stehenden Bauraum besonders gut aus, indem ein besonders langer Elektromotor verwendet wird, um beispielsweise möglichst hohe Drehmomente zu erzeugen. Hinsichtlich des erzeugbaren Drehmomentes ist ein großer Durchmesser in Richtung senkrecht zur Rotationsachse des Rotors besonders vorteilhaft.

Bei einer besonderen Ausführung, die insbesondere als besonders präzise Einstellvorrichtung verwendet werden kann, weisen die in Serie geschalteten Getriebe ausgehend von dem Elektromotor bis zur Abtriebswelle ein Übersetzungsverhältnis auf, das größer als i=100, insbesondere größer als i=200 oder größer als i=300 ist, oder das i=320 beträgt.

Bei einer besonders kompakt ausbildbaren Ausführung ist die Rotationsachse des Rotors des Elektromotors senkrecht zur Rotationsachse der Abtriebswelle ausgerichtet.

Bei einer Ausführung, die den zur Verfügung stehenden Bauraum besonders gut ausnutzt, ist die Rotationsachse wenigstens eines rotierenden Bauteils wenigstens eines der Getriebe nicht parallel und auch nicht senkrecht zur Grundfläche ausgerichtet.

Bei einer ganz besonders vorteilhaften Ausführung ist das Gehäuse flüssigkeitsdicht ausgebildet. Insbesondere kann vorteilhaft vorgesehen sein, dass das Gehäuse ein Schmiermittel, insbesondere Öl, beinhaltet. Auf diese Weise ist gewährleistet, dass insbesondere das Getriebe stets eine ausreichende Schmierung erfährt. Insbesondere kann das Gehäuse vollständig mit Öl aufgefüllt sein, ohne dass ein Gas im Gehäuse verbleibt.

Bei einer ganz besonders vorteilhaften Ausführung, die besonders präzise arbeitet und die insbesondere spielfrei oder spielreduziert ausgebildet sein kann, ist wenigstens eines der Getriebe als Spannungswellengetriebe ausgebildet.

Insbesondere kann im Hinblick auf eine besonders gute Ausnutzung des zur Verfügung stehenden Bauraumes und bei gleichzeitiger Verwendbarkeit eines drehmomentstarken Elektromotors vorteilhaft vorgesehen sein, dass das Spannungswellengetriebe nicht konzentrisch zum Elektromotor angeordnet ist.

Das Spannungswellengetriebe kann vorteilhaft beispielsweise ein Übersetzungsverhältnis im Bereich von i=120 bis i=20 oder im Bereich von i=100 bis i=20 oder im Bereich von i=80 bis i=20 oder im Bereich von i=50 bis i=20, insbesondere im Bereich von i=35 bis i=25, insbesondere von i=30 aufweisen.

Bei einer ganz besonders kompakt ausbildbaren Ausführung ist das Spannungswellengetriebe als Außenläufer mit einem innenverzahnten Flexspline sowie einem außenverzahnten Circularspline und/oder einem außenverzahnten Dynamicspline ausgebildet.

Insbesondere um insgesamt ein möglichst hohes Übersetzungsverhältnis des Aktuators erreichen zu können, kann das Spannungswellengetriebe unmittelbar einem Schneckengetriebe triebtechnisch nachgeschaltet sein. Hierbei kann vorteilhaft insbesondere vorgesehen sein, dass ein Bauteil des Spannungswellengetriebes zusätzlich auch das Schneckenrad des Schneckengetriebes bildet. Eine solche Ausführung ist besonders kompakt und gleichzeitig besonders robust. Beispielsweise kann der Wellengenerator des Spannungswellengetriebes gleichzeitig auch als Schneckenrad eines dem Spannungswellengetriebe vorgeschalteten Schneckengetriebes ausgebildet sein und mit einer Schnecke in Zahneingriff stehen.

Bei einer vorteilhaften Ausführung ist das Spannungswellengetriebe als Ringgetriebe mit zwei innenverzahnten Hohlrädern, nämlich einem Circularspline und einem Dynamicspline, ausgebildet, die über eine Circularsplineverzahnung und eine Dynamicsplineverzahnung mit einem Flexspline in Zahneingriff stehen. Hierbei kann vorteilhaft vorgesehen sein, dass eines der Hohlräder zusätzlich eine Ankoppelverzahnung aufweist. Die Ankoppelverzahnung kann insbesondere eine Außenverzahnung sein. Alternativ oder zusätzlich kann die Ankoppelverzahnung als eine Stirnradverzahnung oder eine Kegelradverzahnung ausgebildet sein.

Ganz allgemein kann vorteilhaft vorgesehen sein, dass wenigstens eines der Getriebe des Aktuators als Schneckengetriebe ausgebildet ist. Im Hinblick auf eine gute Bauraumausnutzung kann hierbei vorgesehen sein, dass der Elektromotor eine Schnecke des Schneckengetriebes unmittelbar antreibt und/oder dass das Schneckengetriebe dem Elektromotor unmittelbar triebtechnisch nachgeschaltet ist. Eine solche Ausführung hat außerdem den besonderen Vorteil, dass zur Ausnutzung des zur Verfügung stehenden Bauraumes gleichzeitig eine Umlenkung auf eine rotierende Welle mit einer anderen Ausrichtung erfolgt.

Das Schneckengetriebe kann vorteilhaft ein Übersetzungsverhältnis aufweisen, das größer als 30 oder größer als 40 ist, oder das 50 beträgt. Eine solche Ausführung ermöglicht es, insgesamt ein besonders großes Übersetzungsverhältnis vom Elektromotor bis zur Abtriebswelle erreichen zu können.

Wenigstens eines der Getriebe des Aktuators kann vorteilhaft als Stirnradgetriebe ausgebildet sein. Insbesondere kann vorteilhaft vorgesehen sein, dass das Stirnradgetriebe dem Schneckengetriebe unmittelbar triebtechnisch nachgeschaltet ist. Außerdem kann zusätzlich vorteilhaft vorgesehen sein, dass ein erstes Stirnrad des Stirnradgetriebes drehfest mit dem Schneckenrad des Schneckengetriebes verbunden ist und mit einem zweiten Stirnrad in Zahneingriff steht.

Im Hinblick auf eine besonders gute Bauraumausnutzung kann darüber hinaus vorteilhaft vorgesehen sein, dass die Rotationsachse des ersten Stirnrades nicht parallel und auch nicht senkrecht zur Grundfläche ausgerichtet ist und/oder dass die Rotationsachse des ersten Stirnrades einen Winkel im Bereich von 60 Grad bis 95 Grad oder im Bereich 70 Grad bis 90 Grad zur Grundfläche angeordnet ist. Alternativ oder zusätzlich kann auch vorgesehen sein, dass die Rotationsachse des zweiten Stirnrades nicht parallel und auch nicht senkrecht zur Richtung der Höhe ausgerichtet ist und/oder dass die Rotationsachse des ersten Stirnrades einen Winkel im Bereich von 60 Grad bis 95 Grad oder im Bereich 70 Grad bis 90 Grad zur Grundfläche angeordnet ist.

Wenigstens eines der Getriebe des Aktuators kann vorteilhaft als Winkelgetriebe ausgebildet sein. Insbesondere kann vorteilhaft vorgesehen sein, dass das Winkelgetriebe dem Stirnradgetriebe unmittelbar triebtechnisch nachgeschaltet ist. Außerdem kann zusätzlich vorteilhaft vorgesehen sein, dass ein erstes Kegelrad des Winkelgetriebes drehfest mit dem Stirnrad des Stirnradgetriebes verbunden ist und mit einem zweiten Kegelrad des Winkelgetriebes in Zahneingriff steht.

Im Hinblick auf eine besonders gute Bauraumausnutzung kann darüber hinaus vorteilhaft vorgesehen sein, dass die Rotationsachse des zweiten Kegelrades senkrecht zur Richtung der Höhe angeordnet ist.

Bei einer ganz besonders vorteilhaften Ausführung ist wenigstens ein weiteres der Getriebe als ein weiteres Winkelgetriebe ausgebildet. Insbesondere im Hinblick auf eine gute Bauraumausnutzung kann das weitere Winkelgetriebe dem Winkelgetriebe unmittelbar triebtechnisch nachgeschaltet sein. Hierbei ist es insbesondere vorteilhaft möglich, dass ein weiteres erstes Kegelrad des weiteren Winkelgetriebes drehfest mit dem zweiten Kegelrad des Winkelgetriebes verbunden ist und mit einem weiteren zweiten Kegelrad des weiteren Winkelgetriebes in Zahneingriff steht. Die Rotationsachse des weiteren zweiten Kegelrades des weiteren Winkelgetriebes kann insbesondere senkrecht oder parallel zur Richtung der Höhe angeordnet sein.

Bei einer ganz besonders vorteilhaften Ausführung ist wenigstens ein weiteres der Getriebe als ein weiteres Stirnradgetriebe ausgebildet. Hierbei kann insbesondere vorteilhaft vorgesehen sein, dass das weitere Stirnradgetriebe dem weiteren Winkelgetriebe unmittelbar triebtechnisch nachgeschaltet ist. Außerdem kann ein weiteres erstes Stirnrad des weiteren Stirnradgetriebes drehfest mit dem weiteren zweiten Kegelrad des weiteren Winkelgetriebes verbunden sein und mit einem weiteren zweiten Stirnrad in Zahneingriff stehen. Insbesondere kann das weitere zweite Stirnrad drehfest mit der Abtriebswelle verbunden sein.

Der Elektromotor kann vorteilhaft als Reluktanzmotor ausgebildet sein. Bei einer solchen Ausführung treten nahezu keine Verluste im Rotor auf, woraus ein besserer Wirkungsgrad als bei herkömmlichen Asynchronmotoren resultiert. Außerdem erfolgt wegen der geringeren Verluste auch eine geringere Erwärmung im Rotor und an den Lagern.

Von ganz besonderem Vorteil ist ein Verteilersystem, insbesondere für ein Kühlsystem, wobei das Verteilersystem einen erfindungsgemäßen Aktuator und ein Verteilerventil aufweist, welches von dem Aktuator gesteuert wird. Ein solches Verteilersystem hat den ganz besonderen Vorteil, dass eine sehr präzise Einstellung des Verteilerventils ermöglicht ist.

Der erfindungsgemäße Aktuator kann vorteilhaft insbesondere in einem Kühlsystem Verwendung finden. Dies beispielsweise um ein Verteilersystem oder ein Umschaltventil des Kühlsystems zu steuern. Hierbei kann insbesondere vorgesehen sein, dass ein flüssiges oder gasförmiges Kühlmittel je nach gewählter Einstellung in unterschiedliche Leitungen gelenkt wird.

Von besonderem Vorteil ist ein Fahrzeug, insbesondere ein elektrisch angetriebenes Fahrzeug, das einen erfindungsgemäßen Aktuator aufweist. Hierbei dient der Aktuator vorzugsweise nicht dem unmittelbaren Vortrieb des Fahrzeuges. Vorteilhaft kann der Aktuator jedoch in unterschiedlichen Systemen des Fahrzeugs, beispielsweise in einem Kühlsystem, insbesondere in einem Akku- oder Motorkühlsystem eingesetzt werden.

Ganz allgemein ist eine Baugruppe, insbesondere Kraftfahrzeugbaugruppe oder Verbrennungsmotor oder Fahrzeuggetriebe oder Bremse, mit einer Verstellwelle und mit einer Vorrichtung zum Antreiben der Verstellwelle, die einen erfindungsgemäßen Aktuator aufweist, von besonderem Vorteil.

In besonders vorteilhafter Weise kann die Vorrichtung zum Antreiben einer Verstellwelle ein Steuerungs- und Sensormodul beinhalten. Insbesondere kann vorteilhaft vorgesehen sein, dass zur Anwendung bei unterschiedlichen Baugruppen, insbesondere Kraftfahrzeugbaugruppen, unterschiedliche Steuerungs- und Sensormodule zur Verfügung stehen, so dass eine erfindungsgemäße Vorrichtung zum Antreiben einer Verstellwelle durch Austausch des Steuerungs- und Sensormoduls auf einfache Weise an geänderte Anforderungen angepasst werden kann. In vorteilhafter Weise kann insbesondere vorgesehen sein, dass die Steuerungselektronik eines solchen Steuerungs- und Sensormoduls sowohl die Funktionselektronik, die grundsätzlich - beispielsweise zur Steuerung und/oder Regelung der Kommutierung - überhaupt nötig ist, um einen Antriebsmotor eines Aktuators betreiben zu können, als auch die eigentliche Befehlselektronik, die die gewünschten Parameter, wie Drehrichtung und/oder Drehgeschwindigkeit und/oder Drehmoment und/oder Drehstellung usw., steuert bzw. regelt, beinhaltet. In vorteilhafter Weise kann insbesondere auch vorgesehen sein, dass der oben bereits erwähnte Rotationslagesensor Bestandteil des Steuerungs- und Sensormoduls ist.

Bei einer besonders vorteilhaften Ausführung ist eine Verstellung ausschließlich bei einer vorgegebenen oder vorgebbaren Phasenlage einer Welle der Baugruppe, insbesondere Kraftfahrzeugbaugruppe, möglich. Insbesondere kann vorgesehen sein, dass die Vorrichtung, insbesondere der Antriebsmotor der Anordnung, ausschließlich bei einer vorgegebenen oder vorgebbaren Phasenlage eine Welle der Baugruppe aktivierbar ist. Auf diese Weise kann erreicht werden, dass eine Verstellung ausschließlich in hierfür günstigen Zeiträumen, beispielsweise des Arbeitstaktes eines Verbrennungsmotors, vorgenommen wird.

In vorteilhafter Weise kann vorgesehen sein, dass die Vorrichtung zum Antreiben Teil eines Verbrennungsmotors ist oder eines Kraftfahrzeuggetriebes ist, das Antriebsenergie von einem Antriebsmotor zu wenigstens einem Rad eines Kraftfahrzeugs überträgt, oder Teil einer Kraftfahrzeugbremse ist.

In ganz besonders vorteilhafter Weise kann vorgesehen sein, dass die Verstellwelle Teil einer Ölpumpe oder einer Wasserpumpe oder eines Ventils oder Vakuumpumpe oder einer variablen Ventiltriebsteuerung eines Einlass- oder Auslassventils eines Verbrennungsmotors oder eines Umschaltventils oder eines Systems zur Zylinderabschaltung oder eines Systems zur Ventilabschaltung durch eine Drossel oder eines Systems zur Steuerung einer Klappe in einem Ansaugkanal oder eines Systems zur Steuerung einer Klappe im Abgaskanal oder eines Systems zur Zylinderbankabschaltung oder eines Systems zur Regelung von Drallklappen im Antragkanal oder eines Systems zur Steuerung einer Drosselklappe für einen Benzin- oder Dieselmotor oder eines Systems zur Steuerung eines Abgasrückführungsventils oder eines Systems zur Steuerung eines Abgasturboladers oder eines Systems zur Steuerung eines Bypasses eines Turboladers oder eines Systems zur Steuerung der Flüssigkeits- oder Luftstromklappen eines Kühlsystems oder einer Kupplungsbetätigung eines Schaltgetriebes oder einer Kupplungsbetätigung eines Doppelkupplungsgetriebes oder eines Systems zur Steuerung von Schaltübergängen oder eines Systems zur Steuerung von Ventilen in Automatik getrieben oder einer Parkbremse in Automatikgetrieben oder einer Parkbremse in einer Fahrzeugbremsanlage oder eines Systems zur Zu- oder Abschaltung eines Allradantriebs oder eines Antriebs für eine Betriebsbremse ist.

Nach einem eigenständigen Erfindungsgedanken ist vorgesehen, dass die Abtriebswelle nicht senkrecht zur Richtung der Höhe ausgerichtet. Ein solcher Aktuator kann zusätzlich eines oder mehrere der in dieser Anmeldung beschriebenen Merkmale, insbesondere eines oder mehrere der in den abhängigen Ansprüchen erwähnten Merkmale, aufweisen. Insbesondere kann die Abtriebswelle parallel zur Richtung der Höhe ausgerichtet sein.

Nach dem eigenständigen Erfindungsgedanken ist ein Aktuator mit einem Elektromotor und mit mehreren, dem Elektromotor in Serie triebtechnisch nachgeschalteten Getrieben, von denen das letzte Getriebe in der Serie eine Abtriebswelle aufweist, besonders vorteilhaft, bei dem der Elektromotor und die Getriebe vollständig in dem von einem Gehäuse des Aktuators umgebenen Bauraum mit einem Volumen V [mm³] angeordnet sind, wobei der Bauraum eine Höhe von h [mm] aufweist und wobei gilt V [mm³] = A [mm²] h [mm] und 5.000 mm² < A < 15.000 mm² und wobei die Rotationsachse des Rotors des Elektromotors senkrecht zur Richtung der Höhe h ausgerichtet ist und wobei der Außendurchmesser des Elektromotors in Richtung der Höhe h genauso groß ist, wie die Höhe h. Ein solcher Aktuator kann, wie bereits erwähnt, zusätzlich eines oder mehrere der in dieser Anmeldung beschriebenen Merkmale, insbesondere eines oder mehrere der in den abhängigen Ansprüchen erwähnten Merkmale, aufweisen.

Vor ganz besonderem Vorteil ist ein Verteilersystem, insbesondere für ein Kühlsystem, wobei das Verteilersystem einen Aktuator nach dem eigenständigen Erfindungsgedanken und ein Verteilerventil aufweist, welches von dem Aktuator gesteuert wird. Ein solches Verteilersystem hat den ganz besonderen Vorteil, dass eine sehr präzise Einstellung des Verteilerventils ermöglicht ist.

Der Aktuator nach dem eigenständigen Erfindungsgedanken kann vorteilhaft insbesondere in einem Kühlsystem Verwendung finden. Dies beispielsweise um ein Verteilersystem oder ein Umschaltventil des Kühlsystems zu steuern. Hierbei kann insbesondere vorgesehen sein, dass ein flüssiges oder gasförmiges Kühlmittel je nach gewählter Einstellung in unterschiedliche Leitungen gelenkt wird.

Von besonderem Vorteil ist ein Fahrzeug, insbesondere ein elektrisch angetriebenes Fahrzeug, das einen Aktuator nach dem eigenständigen Erfindungsgedanken aufweist. Hierbei dient der Aktuator vorzugsweise nicht dem unmittelbaren Vortrieb des Fahrzeuges. Vorteilhaft kann der Aktuator jedoch in unterschiedlichen Systemen des Fahrzeugs, beispielsweise in einem Kühlsystem, insbesondere in einem Akku- oder Motorkühlsystem eingesetzt werden.

Ganz allgemein ist eine Baugruppe, insbesondere Kraftfahrzeugbaugruppe oder Verbrennungsmotor oder Fahrzeuggetriebe oder Bremse, mit einer Verstellwelle und mit einer Vorrichtung zum Antreiben der Verstellwelle, die einen Aktuator nach dem eigenständigen Erfindungsgedanken aufweist, von besonderem Vorteil.

In besonders vorteilhafter Weise kann die Vorrichtung zum Antreiben einer Verstellwelle ein Steuerungs- und Sensormodul beinhalten. Insbesondere kann vorteilhaft vorgesehen sein, dass zur Anwendung bei unterschiedlichen Baugruppen, insbesondere Kraftfahrzeugbaugruppen, unterschiedliche Steuerungs- und Sensormodule zur Verfügung stehen, so dass die Vorrichtung zum Antreiben einer Verstellwelle durch Austausch des Steuerungs- und Sensormoduls auf einfache Weise an geänderte Anforderungen angepasst werden kann. In vorteilhafter Weise kann insbesondere vorgesehen sein, dass die Steuerungselektronik eines solchen Steuerungs- und Sensormoduls sowohl die Funktionselektronik, die grundsätzlich - beispielsweise zur Steuerung und/oder Regelung der Kommutierung - überhaupt nötig ist, um einen Antriebsmotor eines Aktuators betreiben zu können, als auch die eigentliche Befehlselektronik, die die gewünschten Parameter, wie Drehrichtung und/oder Drehgeschwindigkeit und/oder Drehmoment und/oder Drehstellung usw., steuert bzw. regelt, beinhaltet. In vorteilhafter Weise kann insbesondere auch vorgesehen sein, dass der Rotationslagesensor Bestandteil des Steuerungs- und Sensormoduls ist.

Bei einer besonders vorteilhaften Ausführung ist eine Verstellung ausschließlich bei einer vorgegebenen oder vorgebbaren Phasenlage einer Welle der Baugruppe, insbesondere Kraftfahrzeugbaugruppe, möglich. Insbesondere kann vorgesehen sein, dass die Vorrichtung, insbesondere der Antriebsmotor der Anordnung, ausschließlich bei einer vorgegebenen oder vorgebbaren Phasenlage eine Welle der Baugruppe aktivierbar ist. Auf diese Weise kann erreicht werden, dass eine Verstellung ausschließlich in hierfür günstigen Zeiträumen, beispielsweise des Arbeitstaktes eines Verbrennungsmotors, vorgenommen wird.

In vorteilhafter Weise kann vorgesehen sein, dass die Vorrichtung zum Antreiben, die den Aktuator nach dem eigenständigen Erfindungsgedanken beinhaltet, Teil eines Verbrennungsmotors ist oder eines Kraftfahrzeuggetriebes ist, das Antriebsenergie von einem Antriebsmotor zu wenigstens einem Rad eines Kraftfahrzeugs überträgt, oder Teil einer Kraftfahrzeugbremse ist.

In ganz besonders vorteilhafter Weise kann vorgesehen sein, dass die Verstellwelle Teil einer Ölpumpe oder einer Wasserpumpe oder eines Ventils oder Vakuumpumpe oder einer variablen Ventiltriebsteuerung eines Einlass- oder Auslassventils eines Verbrennungsmotors oder eines Umschaltventils oder eines Systems zur Zylinderabschaltung oder eines Systems zur Ventilabschaltung durch eine Drossel oder eines Systems zur Steuerung einer Klappe in einem Ansaugkanal oder eines Systems zur Steuerung einer Klappe im Abgaskanal oder eines Systems zur Zylinderbankabschaltung oder eines Systems zur Regelung von Drallklappen im Antragkanal oder eines Systems zur Steuerung einer Drosselklappe für einen Benzin- oder Dieselmotor oder eines Systems zur Steuerung eines Abgasrückführungsventils oder eines Systems zur Steuerung eines Abgasturboladers oder eines Systems zur Steuerung eines Bypasses eines Turboladers oder eines Systems zur Steuerung der Flüssigkeits- oder Luftstromklappen eines Kühlsystems oder einer Kupplungsbetätigung eines Schaltgetriebes oder einer Kupplungsbetätigung eines Doppelkupplungsgetriebes oder eines Systems zur Steuerung von Schaltübergängen oder eines Systems zur Steuerung von Ventilen in Automatik getrieben oder einer Parkbremse in Automatikgetrieben oder einer Parkbremse in einer Fahrzeugbremsanlage oder eines Systems zur Zu- oder Abschaltung eines Allradantriebs oder eines Antriebs für eine Betriebsbremse ist.

Nach einem eigenständigen Erfindungsgedanken ist eine Vorrichtung gemäß wenigstens einem der nachfolgenden Aspekte vorteilhaft.
1. Erster Aspekt:
   Aktuator mit einem Elektromotor und mit mehreren, dem Elektromotor in Serie triebtechnisch nachgeschalteten Getrieben, von denen das letzte Getriebe in der Serie eine Abtriebswelle aufweist, dadurch gekennzeichnet, dass der Elektromotor und die Getriebe vollständig in dem von einem Gehäuse des Aktuators umgebenen Bauraum mit einem Volumen V [mm³] angeordnet sind, wobei der Bauraum eine Höhe von h [mm] aufweist und wobei gilt V [mm³] = A [mm²] h [mm] und 5.000 mm² < A < 15.000 mm² und wobei die Rotationsachse des Rotors des Elektromotors senkrecht zur Richtung der Höhe h ausgerichtet ist und wobei der Außendurchmesser des Elektromotors in Richtung der Höhe h genauso groß ist, wie die Höhe h.
2. Aktuator nach Aspekt 1, dadurch gekennzeichnet, dass der Bauraum die Form eines Zylinders aufweist, der eine Grundfläche aufweist, wobei die Höhe senkrecht zur Grundfläche ausgerichtet ist und, wobei die Rotationsachse des Rotors des Elektromotors parallel zur Grundfläche ausgerichtet ist.
3. Aktuator nach Aspekt 1, dadurch gekennzeichnet, dass die Abtriebswelle parallel zur Richtung der Höhe ausgerichtet ist.
4. Aktuator nach Aspekt 1, dadurch gekennzeichnet, dass die Abtriebswelle senkrecht zur Richtung der Höhe ausgerichtet ist.
5. Aktuator nach einem der Aspekte 1 bis 4, dadurch gekennzeichnet, dass die Grundfläche ein Rechteck ist.
6. Aktuator nach Aspekt 5, dadurch gekennzeichnet, dass die Seitenkanten des Rechtecks unterschiedlich lang sind und die Rotationsachse des Rotors des Elektromotors parallel zur längeren Seitenkante der Grundfläche ausgerichtet ist.
7. Aktuator nach einem der Aspekte 1 bis 6, dadurch gekennzeichnet, dass die in Serie geschalteten Getriebe ausgehend von dem Elektromotor bis zur Abtriebswelle ein Übersetzungsverhältnis aufweisen, das größer als i=100, insbesondere größer als i=200 oder größer als i=300 ist, oder das i=320 beträgt.
8. Aktuator nach einem der Aspekte 1 bis 7, dadurch gekennzeichnet, dass die Rotationsachse des Rotors des Elektromotors senkrecht zur Rotationsachse der Abtriebswelle ausgerichtet ist.
9. Aktuator nach einem der Aspekte 1 bis 8, dadurch gekennzeichnet, dass die Rotationsachse wenigstens eines rotierenden Bauteils wenigstens eines der Getriebe nicht parallel und auch nicht senkrecht zur Grundfläche ausgerichtet ist.
10. Aktuator nach einem der Aspekte 1 bis 9, dadurch gekennzeichnet, dass das Gehäuse flüssigkeitsdicht ausgebildet ist und/oder dass das Gehäuse ein Schmiermittel, insbesondere Öl, beinhaltet.
11. Aktuator nach einem der Aspekte 1 bis 10, dadurch gekennzeichnet, dass wenigstens eines der Getriebe als Spannungswellengetriebe ausgebildet ist.
12. Aktuator nach Aspekt 11, dadurch gekennzeichnet, dass das Spannungswellengetriebe nicht konzentrisch zum Elektromotor angeordnet ist.
13. Aktuator nach Aspekt 11 oder 12, dadurch gekennzeichnet, dass das Spannungswellengetriebe ein Übersetzungsverhältnis im Bereich von i=120 bis i=20 oder im Bereich von i=100 bis i=20 oder im Bereich von i=80 bis i=20 oder im Bereich von i=50 bis i=20, insbesondere im Bereich von i=35 bis i=25, insbesondere von i=30 aufweist.
14. Aktuator nach einem der Aspekte 11 bis 13, dadurch gekennzeichnet, dass das Spannungswellengetriebe als Außenläufer mit einem innenverzahnten Flexspline sowie einem außenverzahnten Circularspline und/oder einem außenverzahnten Dynamicspline ausgebildet ist.
15. Aktuator nach einem der Aspekte 11 bis 14, dadurch gekennzeichnet, dass das Spannungswellengetriebe einem Schneckengetriebe unmittelbar triebtechnisch nachgeschaltet ist.
16. Aktuator nach Aspekt 15, dadurch gekennzeichnet, dass ein Bauteil des Spannungswellengetriebes zusätzlich auch das Schneckenrad des Schneckengetriebes bildet.
17. Aktuator nach Aspekt 15 oder 16 , dadurch gekennzeichnet, dass der Wellengenerator gleichzeitig auch als Schneckenrad eines dem Spannungswellengetriebe vorgeschalteten Schneckengetriebes ausgebildet ist und mit einer Schnecke in Zahneingriff steht.
18. Aktuator nach einem der Aspekte 11 bis 17, dadurch gekennzeichnet, dass das Spannungswellengetriebe als Ringgetriebe mit zwei innenverzahnten Hohlrädern, nämlich einem Circularspline und einem Dynamicspline, ausgebildet ist, die über eine Circularsplineverzahnung und eine Dynamicsplineverzahnung mit einem Flexspline in Zahneingriff stehen.
19. Aktuator nach Aspekt 18, dadurch gekennzeichnet, dass eines der Hohlräder zusätzlich eine Ankoppelverzahnung aufweist.
20. Aktuator nach Aspekt 19, dadurch gekennzeichnet, dass die Ankoppelverzahnung eine Außenverzahnung ist.
21. Aktuator nach Aspekt 19 oder 20, dadurch gekennzeichnet, dass die Ankoppelverzahnung eine Stirnradverzahnung oder eine Kegelradverzahnung ist.
22. Aktuator nach einem der Aspekte 1 bis 21, dadurch gekennzeichnet, dass wenigstens eines der Getriebe als Schneckengetriebe ausgebildet ist
23. Aktuator nach Aspekt 22, dadurch gekennzeichnet, dass der Elektromotor eine Schnecke des Schneckengetriebe unmittelbar antreibt und/oder dass das Schneckengetriebe dem Elektromotor unmittelbar triebtechnisch nachgeschaltet ist.
24. Aktuator nach Aspekt 22 oder 23, dadurch gekennzeichnet, dass das Schneckengetriebe ein Übersetzungsverhältnis aufweist, das größer als 30 oder größer als 40 ist, oder das 50 beträgt.
25. Aktuator nach einem der Aspekte 1 bis 24, dadurch gekennzeichnet, dass wenigstens eines der Getriebe als Stirnradgetriebe ausgebildet ist.
26. Aktuator nach einem der Aspekte 22 bis 24 und Aspekt 25, dadurch gekennzeichnet, dass das Stirnradgetriebe dem Schneckengetriebe unmittelbar triebtechnisch nachgeschaltet ist.
27. Aktuator nach Aspekt 26, dadurch gekennzeichnet, dass ein erstes Stirnrad des Stirnradgetriebes drehfest mit dem Schneckenrad des Schneckengetriebes verbunden ist und mit einem zweiten Stirnrad in Zahneingriff steht.
28. Aktuator nach Aspekt 27, dadurch gekennzeichnet, dass
   a. die Rotationsachse des ersten Stirnrades nicht parallel und auch nicht senkrecht zur Grundfläche ausgerichtet ist und/oder dass die Rotationsachse des ersten Stirnrades in einem Winkel im Bereich von 60 Grad bis 95 Grad oder im Bereich 70 Grad bis 90 Grad zur Grundfläche angeordnet ist, und/oder dass
   b. die Rotationsachse des zweiten Stirnrades nicht parallel und auch nicht senkrecht zur Richtung der Höhe ausgerichtet ist und/oder dass die Rotationsachse des ersten Stirnrades in einem Winkel im Bereich von 60 Grad bis 95 Grad oder im Bereich 70 Grad bis 90 Grad zur Grundfläche angeordnet ist.
29. Aktuator nach einem der Aspekte 1 bis 28, dadurch gekennzeichnet, dass wenigstens eines der Getriebe als Winkelgetriebe ausgebildet ist.
30. Aktuator nach einem der Aspekte 25 bis 28 und Aspekt 29, dadurch gekennzeichnet, dass das Winkelgetriebe dem Stirnradgetriebe unmittelbar triebtechnisch nachgeschaltet ist.
31. Aktuator nach Aspekt 30, dadurch gekennzeichnet, dass ein erstes Kegelrad des Winkelgetriebes drehfest mit dem Stirnrad des Stirnradgetriebes verbunden ist und mit einem zweiten Kegelrad des Winkelgetriebes in Zahneingriff steht.
32. Aktuator nach Aspekt 31, dadurch gekennzeichnet, dass die Rotationsachse des zweiten Kegelrades senkrecht zur Richtung der Höhe angeordnet ist.
33. Aktuator nach einem der Aspekte 29 bis 32, dadurch gekennzeichnet, dass wenigstens ein weiteres der Getriebe als ein weiteres Winkelgetriebe ausgebildet ist.
34. Aktuator nach Aspekt 33, dadurch gekennzeichnet, dass das weitere Winkelgetriebe dem Winkelgetriebe unmittelbar triebtechnisch nachgeschaltet ist.
35. Aktuator nach Aspekt 34, dadurch gekennzeichnet, dass ein weiteres erstes Kegelrad des weiteren Winkelgetriebes drehfest mit dem zweiten Kegelrad des Winkelgetriebes verbunden ist und mit einem weiteren zweiten Kegelrad des weiteren Winkelgetriebes in Zahneingriff steht.
36. Aktuator nach Aspekt 35, dadurch gekennzeichnet, dass die Rotationsachse des weiteren zweiten Kegelrades des weiteren Winkelgetriebes senkrecht oder parallel zur Richtung der Höhe angeordnet ist.
37. Aktuator nach einem der Aspekte 25 bis 36, dadurch gekennzeichnet, dass wenigstens ein weiteres der Getriebe als ein weiteres Stirnradgetriebe ausgebildet ist.
38. Aktuator nach Aspekt 37, dadurch gekennzeichnet, dass das weitere Stirnradgetriebe dem weiteren Winkelgetriebe unmittelbar triebtechnisch nachgeschaltet ist.
39. Aktuator nach Aspekt 37 oder 38, dadurch gekennzeichnet, dass ein weiteres erstes Stirnrad des Stirnradgetriebes drehfest mit dem weiteren zweiten Kegelrad des weiteren Winkelgetriebes verbunden ist und mit einem weiteren zweiten Stirnrad in Zahneingriff steht.
40. Aktuator nach Aspekt 39, dadurch gekennzeichnet, dass das weitere zweite Stirnrad drehfest mit der Abtriebswelle verbunden ist.
41. Aktuator nach einem der Aspekte 1 bis 40, dadurch gekennzeichnet, dass der Elektromotor als Reluktanzmotor ausgebildet ist
42. Verteilersystem, insbesondere für ein Kühlsystem, dadurch gekennzeichnet, dass das Verteilersystem einen Aktuator nach einem der Aspekte 1 bis 41 und ein Verteilerventil aufweist, welches von dem Aktuator gesteuert wird.
43. Kühlsystem, das einen Aktuator nach einem der Aspekte 1 bis 41 aufweist.
44. Fahrzeug, insbesondere elektrisch angetriebenes Fahrzeug, das einen Aktuator nach einem der Aspekte 1 bis 41 aufweist.
45. Baugruppe, insbesondere Kraftfahrzeugbaugruppe oder Verbrennungsmotor oder Fahrzeuggetriebe oder Bremse, mit einer Verstellwelle und mit einer Vorrichtung zum Antreiben der Verstellwelle, dadurch gekennzeichnet, dass die Vorrichtung einen Aktuator nach einem der Aspekte 1 bis 41 aufweist.
46. Baugruppe nach Aspekt 45, dadurch gekennzeichnet, dass die Verstellwelle Teil einer Ölpumpe oder einer Wasserpumpe oder eines Ventils oder Vakuumpumpe oder einer variablen Ventiltriebsteuerung eines Einlass- oder Auslassventils eines Verbrennungsmotors oder eines Umschaltventils oder eines Systems zur Zylinderabschaltung oder eines Systems zur Ventilabschaltung durch eine Drossel oder eines Systems zur Steuerung einer Klappe in einem Ansaugkanal oder eines Systems zur Steuerung einer Klappe im Abgaskanal oder eines Systems zur Zylinderbankabschaltung oder eines Systems zur Regelung von Drallklappen im Antragkanal oder eines Systems zur Steuerung einer Drosselklappe für einen Benzin- oder Dieselmotor oder eines Systems zur Steuerung eines Abgasrückführungsventils oder eines Systems zur Steuerung eines Abgasturboladers oder eines Systems zur Steuerung eines Bypasses eines Turboladers oder eines Systems zur Steuerung der Flüssigkeits- oder Luftstromklappen eines Kühlsystems oder einer Kupplungsbetätigung eines Schaltgetriebes oder einer Kupplungsbetätigung eines Doppelkupplungsgetriebes oder eines Systems zur Steuerung von Schaltübergängen oder eines Systems zur Steuerung von Ventilen in Automatik getrieben oder einer Parkbremse in Automatikgetrieben oder einer Parkbremse in einer Fahrzeugbremsanlage oder eines Systems zur Zu- oder Abschaltung eines Allradantriebs oder eines Antriebs für eine Betriebsbremse ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch ein Ausführungsbeispiel eines erfindungsgemäßen Aktuators in einer Seitendarstellung,
- Fig. 2: das Ausführungsbeispiel eines in einer anderen Seitendarstellung, und
- Fig. 3 und 4: schematisch in unterschiedlichen Ansichten ein Ausführungsbeispiel eines alternativen Aktuators.

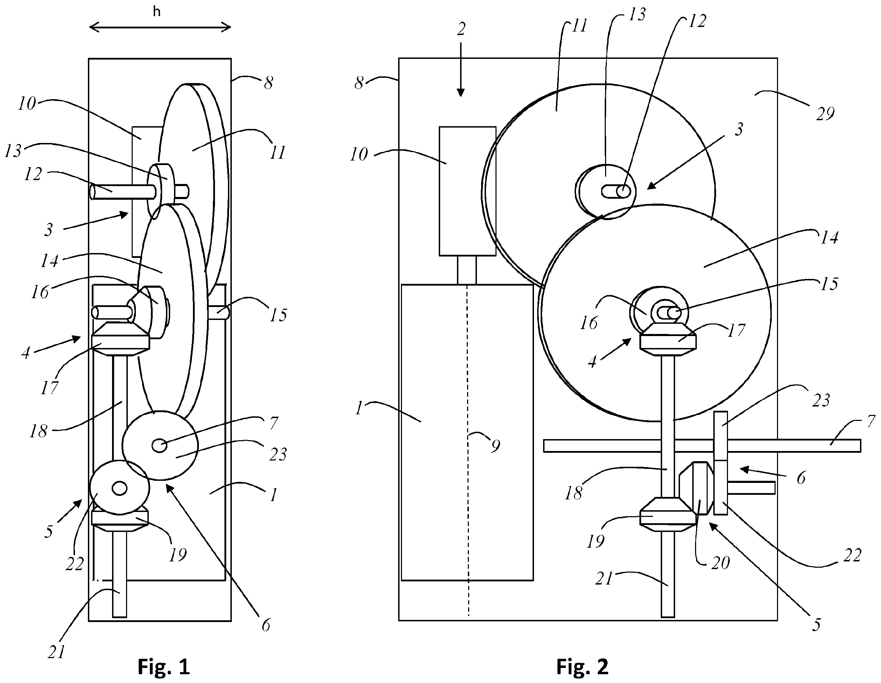

Die Figuren 1 und 2 zeigen schematisch ein Ausführungsbeispiel eines erfindungsgemäßen Aktuators in unterschiedlichen Seitendarstellungen.

Der Aktuator weist einen Elektromotor 1 und mehrere, dem Elektromotor 1 in Serie triebtechnisch nachgeschaltete Getriebe 2, 3, 4, 5, 6 auf, von denen das fünfte Getriebe 6 in der Serie eine Abtriebswelle 7 aufweist. Der Elektromotor 1 und die Getriebe 2, 3, 4, 5, 6 sind vollständig in dem von einen Gehäuse 8 des Aktuators umgebenen Bauraum mit einem Volumen V [mm³] angeordnet, wobei der Bauraum eine Höhe von h [mm] aufweist und wobei gilt V [mm³] = A [mm²] h [mm] und 5.000 mm² < A < 15.000 mm² und wobei die Rotationsachse 9 des (nicht eingezeichneten) Rotors des Elektromotors 1 senkrecht zur Richtung der Höhe h ausgerichtet ist und wobei der Außendurchmesser des Elektromotors 1 in Richtung der Höhe h genauso groß ist, wie die Höhe h. Das Gehäuse weist in diesem Beispiel eine quaderförmige Form auf. Das Gehäuse 8 kann jedoch auch eine ganz andere Form aufweisen. Insbesondere ist es auch möglich, dass die Grundfläche 29 des Gehäuses 8 nicht eben ist, aber einen rechteckigen Umfangsrand aufweist. Beispielsweise kann das Gehäuse 8 eine Ausbuchtung für einen Teil des Elektromotors 1 aufweisen.

Bei einer dargestellten Ausführung ist die Abtriebswelle 7 senkrecht zur Richtung der Höhe h ausgerichtet und tritt auf einer der schmalen Seiten aus dem Gehäuse 8 aus. Es ist alternativ allerdings auch möglich, dass die Abtriebswelle 7 durch eine der großen Seitenflächen des quaderförmigen Gehäuses 8 austritt.

Das in der Serienschaltung erste Getriebe 2 des Aktuators 1 ist als Schneckengetriebe ausgebildet. Der Elektromotor 1 treibt eine Schnecke 10 des Schneckengetriebes unmittelbar an Die Schnecke steht ihrerseits mit einem Schneckenrad 11 in Zahneingriff, das drehfest mit einer drehbar gelagerten, ersten Welle 12 verbunden ist. Das Schneckengetriebe kann vorteilhaft ein Übersetzungsverhältnis aufweisen, das größer als 30 oder größer als 40 ist, oder das 50 beträgt.

Auf der Welle 12 ist ein erstes Stirnrad 13 eines zweiten Getriebes 3, das als Stirnradgetriebe ausgebildet ist, drehfest zur Welle 12 gelagert. Das erste Stirnrad 13 steht in Zahneingriff mit einem zweiten Stirnrad 14 des zweiten Getriebes 3, das auf einer zweiten Welle 15 drehfest gelagert ist.

Im Hinblick auf eine besonders gute Bauraumausnutzung sind die erste Welle 12 und die zweite Welle 15 nicht parallel und auch nicht senkrecht zu den Grundflächen 29 (große rechteckige Seitenflächen) des Gehäuses 8 ausgerichtet.

Das dritte Getriebe 4 ist als Winkelgetriebe ausgebildet und dem Stirnradgetriebe (zweites Getriebe 3) unmittelbar triebtechnisch nachgeschaltet. Ein erstes Kegelrad 16 des Winkelgetriebes (drittes Getriebe 4) ist ebenfalls auf der zweiten Welle 15 angeordnet und so drehfest mit dem zweiten Stirnrad 14 des Stirnradgetriebes (zweites Getriebe 3) verbunden. Das erste Kegelrad 16 des Winkelgetriebes (drittes Getriebe 4) steht mit einem zweiten Kegelrad 17 des Winkelgetriebes (drittes Getriebe 4) in Zahneingriff, das auf einer dritten Welle 18 drehfest gelagert ist.

Es ist ein viertes Getriebe 5 als ein weiteres Winkelgetriebe ausgebildet. Das weitere Winkelgetriebe (viertes Getriebe 5) ist dem Winkelgetriebe (drittes Getriebe 4) unmittelbar triebtechnisch nachgeschaltet. Hierzu ist ein weiteres erstes Kegelrad 19 des weiteren Winkelgetriebes (viertes Getriebe 5) drehfest über die dritte Welle 18 mit dem zweiten Kegelrad 17 des Winkelgetriebes (drittes Getriebe 4) verbunden. Das weitere erste Kegelrad 19 ist auf einer vierten Welle 21 drehfest gelagert und steht mit einem weiteren zweiten Kegelrad 20 des weiteren Winkelgetriebes (viertes Getriebe 5) in Zahneingriff. Die Rotationsachse des weiteren zweiten Kegelrades 20 des weiteren Winkelgetriebes ist in diesem Beispiel senkrecht zur Richtung der Höhe h angeordnet sein. Es ist alternativ auch möglich, das weitere Winkelgetriebe (viertes Getriebe 5) so auszurichten, dass die Rotationsachse des weiteren zweiten Kegelrades 20 parallel zur Richtung der Höhe h angeordnet ist, beispielsweise wenn die Abtriebswelle durch die Grundfläche 29 austreten soll.

Dem weiteren Winkelgetriebe (viertes Getriebe 5) ist ein fünftes Getriebe 6 nachgeschaltet, das als ein weiteres Stirnradgetriebe ausgebildet ist. Hierbei ist vorgesehen, dass das weitere Stirnradgetriebe (fünftes Getriebe 6) dem weiteren Winkelgetriebe (viertes Getriebe 5) unmittelbar triebtechnisch nachgeschaltet ist. Es ist ein weiteres erstes Stirnrad 22 des weiteren Stirnradgetriebes drehfest mit dem weiteren zweiten Kegelrad 20 des weiteren Winkelgetriebes verbunden. Das weitere erste Stirnrad 22 steht mit einem weiteren zweiten Stirnrad 23, das drehfest mit der Abtriebswelle 7 verbunden ist, in Zahneingriff.

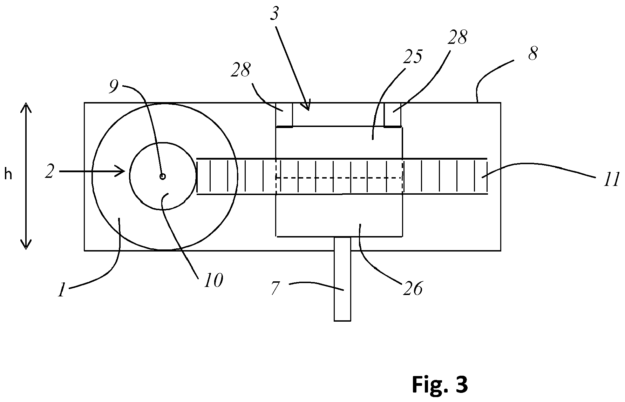

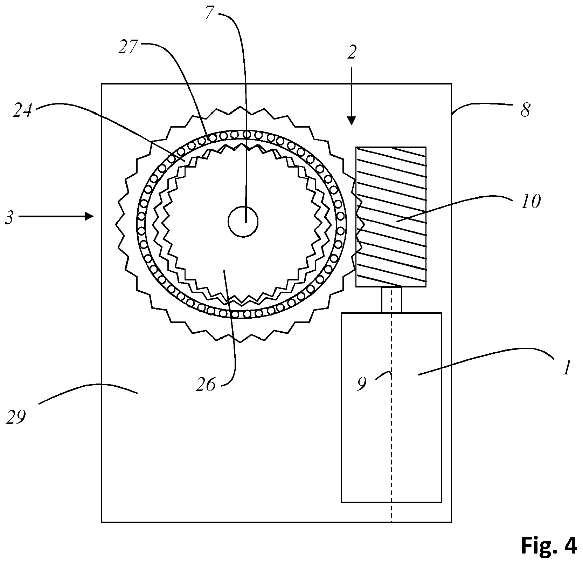

Die Figuren 3 und 4 zeigen schematisch in unterschiedlichen Ansichten ein Ausführungsbeispiel eines alternativen Aktuators.

Der Aktuator weist einen Elektromotor 1 sowie ein erstes Getriebe 2 und ein zweites Getriebe 3 auf, die dem Elektromotor 1 in Serie triebtechnisch nachgeschaltet sind. Das zweite Getriebe 3 weist eine Abtriebswelle 7 auf. Der Elektromotor 1 und die Getriebe 2, 3, sind vollständig in dem von einen Gehäuse 8 des Aktuators 1 umgebenen Bauraum mit einem Volumen V [mm³] angeordnet, wobei der Bauraum eine Höhe von h [mm] aufweist und wobei gilt V [mm³] = A [mm²] h [mm] und 5.000 mm² < A < 15.000 mm² und wobei die Rotationsachse 9 des (nicht eingezeichneten) Rotors des Elektromotors 1 senkrecht zur Richtung der Höhe h ausgerichtet ist und wobei der Außendurchmesser des Elektromotors 1 in Richtung der Höhe h genauso groß ist, wie die Höhe h. Das Gehäuse weist in diesem Beispiel eine quaderförmige Form auf.

Bei einer dargestellten Ausführung ist die Abtriebswelle 7 parallel zur Richtung der Höhe h ausgerichtet und tritt auf einer der großen Seiten (große Grundfläche 29 des quaderförmigen Gehäuses) aus dem Gehäuse 8 aus. Es ist alternativ allerdings auch möglich, dass die Abtriebswelle 7 durch eine der kleineren Seitenflächen des quaderförmigen Gehäuses 8 austritt. Hierzu kann dem zweiten Getriebe 3 beispielsweise ein Umlenkgetriebe, beispielsweise ein Winkelgetriebe, triebtechnisch nachgeschaltet sein.

Das in der Serienschaltung erste Getriebe 2 des Aktuators 1 ist als Schneckengetriebe ausgebildet. Der Elektromotor 1 treibt eine Schnecke 10 des Schneckengetriebes unmittelbar an. Die Schnecke 10 steht ihrerseits mit einem außenverzahnten Schneckenrad 11 in Zahneingriff.

Das dem Schneckengetriebe (erstes Getriebe 2) triebtechnisch nachgeschaltete zweite Getriebe 3 ist als Spannungswellengetriebe ausgebildet. Das Spannungswellengetriebe ist als Außenläufer mit einem innenverzahnten Flexspline 24 sowie einem außenverzahnten Circularspline 25 und einem außenverzahnten Dynamicspline 26 ausgebildet ist. Der Dynamicspline 26 ist drehfest mit der Abtriebswelle 7 verbunden.

Das außenverzahnte Schneckenrad 11 des Schneckengetriebes (erstes Getriebe 2) ist als Hohlrad ausgebildet. Der Außenumfang, der die Außenverzahnung aufweist, ist kreisrund ausgebildet, während der Innenumfang elliptisch ausgebildet ist. Das außenverzahnte Schneckenrad 11 bildet gleichzeitig den Wellengenerator des Spannungswellengetriebes (zweites Getriebe 3). Das außenverzahnte Schneckenrad 11 umgibt ein radialflexibles Wälzlager 27. An dem Innenumfang des Schneckenrades 11 liegt der Außenring des radialflexiblen Wälzlagers 27 an. Der Innenring des radialflexiblen Wälzlagers 27 liegt an der Außenseite eines innenverzahnten Flexsplines 24 an. Durch den elliptischen Innenumfang des Schneckenrades 11 werden das radialflexible Wälzlagers 27 und der innenverzahnte Flexsplines 24 ebenfalls in eine elliptische Form gedrückt, so dass der außenverzahnte Circularspline 25 und der außenverzahnte Dynamicspline 26 jeweils an zwei gegenüberliegenden Stellen mit dem innenverzahnten Flexspline 24 in Zahneingriff stehen. Der Circularspline 25 ist mittels eines Befestigungsmittels 28, beispielsweise Schrauben, drehfest mit dem Gehäuse 8 verbunden. Der mit der Abtriebswelle 7 drehfest verbundene Dynamicspline 26 fungiert als Abtrieb des Spannungswellengetriebes (zweites Getriebe 3).

### Bezugszeichenliste:

- 1: Aktuator
- 2: erstes Getriebe
- 3: zweites Getriebe
- 4: drittes Getriebe
- 5: viertes Getriebe
- 6: fünftes Getriebe
- 7: Abtriebswelle
- 8: Gehäuse
- 9: Rotationsachse
- 10: Schnecke
- 11: Schneckenrad
- 12: erste Welle
- 13: erstes Stirnrad
- 14: zweites Stirnrad
- 15: zweite Welle
- 16: erstes Kegelrad
- 17: zweites Kegelrad
- 18: dritte Welle
- 19: weiteres erstes Kegelrad
- 20: weiteres zweites Kegelrad
- 21: vierte Welle
- 22: weiteres erstes Stirnrad
- 23: weiteres zweites Stirnrad
- 24: Flexspline
- 25: Circularspline
- 26: Dynamicspline
- 27: Wälzlager
- 28: Befestigungsmittel
- 29: Grundfläche

## Patentansprüche

1. Aktuator mit einem Elektromotor und mit mehreren, dem Elektromotor in Serie triebtechnisch nachgeschalteten Getrieben, von denen das letzte Getriebe in der Serie eine Abtriebswelle aufweist, **dadurch gekennzeichnet, dass** der Elektromotor und die Getriebe vollständig in dem von einem Gehäuse des Aktuators umgebenen Bauraum mit einem Volumen V [mm³] angeordnet sind, wobei der Bauraum eine Höhe von h [mm] aufweist und wobei gilt V [mm³] = A [mm²] h [mm] und 5.000 mm² < A < 15.000 mm² und wobei die Abtriebswelle senkrecht zur Richtung der Höhe ausgerichtet ist und wobei auch die Rotationsachse des Rotors des Elektromotors senkrecht zur Richtung der Höhe h ausgerichtet ist und wobei der Außendurchmesser des Elektromotors in Richtung der Höhe h genauso groß ist, wie die Höhe h.

2. Aktuator nach Anspruch 1, **dadurch gekennzeichnet, dass** der Bauraum die Form eines Zylinders aufweist, der eine Grundfläche aufweist, wobei die Höhe senkrecht zur Grundfläche ausgerichtet ist und, wobei die Rotationsachse des Rotors des Elektromotors parallel zur Grundfläche ausgerichtet ist.

3. Aktuator nach Anspruch 1 oder 2, **dadurch gekennzeichnet, dass**
a. die Grundfläche ein Rechteck ist, oder dass
b. die Grundfläche ein Rechteck ist, wobei die Seitenkanten des Rechtecks unterschiedlich lang sind und die Rotationsachse des Rotors des Elektromotors parallel zur längeren Seitenkante der Grundfläche ausgerichtet ist.

4. Aktuator nach einem der Ansprüche 1 bis 3, **dadurch gekennzeichnet, dass**
a. die in Serie geschalteten Getriebe ausgehend von dem Elektromotor bis zur Abtriebswelle ein Übersetzungsverhältnis aufweisen, das größer als i=100, insbesondere größer als i=200 oder größer als i=300 ist, oder das i=320 beträgt, und/oder dass
b. die Rotationsachse des Rotors des Elektromotors senkrecht zur Rotationsachse der Abtriebswelle ausgerichtet ist, und/oder dass
c. die Rotationsachse wenigstens eines rotierenden Bauteils wenigstens eines der Getriebe nicht parallel und auch nicht senkrecht zur Grundfläche ausgerichtet ist,
d. das Gehäuse flüssigkeitsdicht ausgebildet ist und/oder dass
e. das Gehäuse ein Schmiermittel, insbesondere Öl, beinhaltet.

5. Aktuator nach einem der Ansprüche 1 bis 4, **dadurch gekennzeichnet, dass**
a. wenigstens eines der Getriebe als Spannungswellengetriebe ausgebildet ist, und/oder dass
b. wenigstens eines der Getriebe als Spannungswellengetriebe ausgebildet ist, wobei das Spannungswellengetriebe nicht konzentrisch zum Elektromotor angeordnet ist, und/oder dass
c. wenigstens eines der Getriebe als Spannungswellengetriebe ausgebildet ist, das ein Übersetzungsverhältnis im Bereich von i=120 bis i=20 oder im Bereich von i=100 bis i=20 oder im Bereich von i=80 bis i=20 oder im Bereich von i=50 bis i=20, insbesondere im Bereich von i=35 bis i=25, insbesondere von i=30 aufweist, und/oder dass
d. wenigstens eines der Getriebe als Spannungswellengetriebe ausgebildet ist, das als Außenläufer mit einem innenverzahnten Flexspline sowie einem außenverzahnten Circularspline und/oder einem außenverzahnten Dynamicspline ausgebildet ist, und/oder dass
e. wenigstens eines der Getriebe als Spannungswellengetriebe ausgebildet ist, das einem Schneckengetriebe unmittelbar triebtechnisch nachgeschaltet ist, und/oder dass
f. wenigstens eines der Getriebe als Spannungswellengetriebe ausgebildet ist, wobei ein Bauteil des Spannungswellengetriebes zusätzlich auch das Schneckenrad des Schneckengetriebes bildet, und/oder dass
g. wenigstens eines der Getriebe als Spannungswellengetriebe ausgebildet ist, wobei der Wellengenerator gleichzeitig auch als Schneckenrad eines dem Spannungswellengetriebe vorgeschalteten Schneckengetriebes ausgebildet ist und mit einer Schnecke in Zahneingriff steht, und/oder dass
h. wenigstens eines der Getriebe als Spannungswellengetriebe ausgebildet ist, wobei das Spannungswellengetriebe als Ringgetriebe mit zwei innenverzahnten Hohlrädern, nämlich einem Circularspline und einem Dynamicspline, ausgebildet ist, die über eine Circularsplineverzahnung und eine Dynamicsplineverzahnung mit einem Flexspline in Zahneingriff stehen, und/oder dass
i. wenigstens eines der Getriebe als Spannungswellengetriebe ausgebildet ist, wobei das Spannungswellengetriebe als Ringgetriebe mit zwei innenverzahnten Hohlrädern, nämlich einem Circularspline und einem Dynamicspline, ausgebildet ist, die über eine Circularsplineverzahnung und eine Dynamicsplineverzahnung mit einem Flexspline in Zahneingriff stehen, und wobei eines der Hohlräder zusätzlich eine Ankoppelverzahnung aufweist.

6. Aktuator nach einem der Ansprüche 1 bis 5, **dadurch gekennzeichnet, dass**
a. wenigstens eines der Getriebe als Schneckengetriebe ausgebildet ist, und/oder dass
b. wenigstens eines der Getriebe als Schneckengetriebe ausgebildet ist, wobei der Elektromotor eine Schnecke des Schneckengetriebe unmittelbar antreibt und/oder dass das Schneckengetriebe dem Elektromotor unmittelbar triebtechnisch nachgeschaltet ist, und/oder dass
c. wenigstens eines der Getriebe als Schneckengetriebe ausgebildet ist, das ein Übersetzungsverhältnis aufweist, das größer als 30 oder größer als 40 ist, oder das 50 beträgt.

7. Aktuator nach einem der Ansprüche 1 bis 6, **dadurch gekennzeichnet, dass**
a. wenigstens eines der Getriebe als Stirnradgetriebe ausgebildet ist, oder dass
b. wenigstens eines der Getriebe als Stirnradgetriebe ausgebildet ist, das einem Schneckengetriebe unmittelbar triebtechnisch nachgeschaltet ist, oder dass
c. wenigstens eines der Getriebe als Stirnradgetriebe ausgebildet ist, das einem Schneckengetriebe unmittelbar triebtechnisch nachgeschaltet ist, wobei ein erstes Stirnrad des Stirnradgetriebes drehfest mit dem Schneckenrad des Schneckengetriebes verbunden ist und mit einem zweiten Stirnrad in Zahneingriff steht, oder dass
d. wenigstens eines der Getriebe als Stirnradgetriebe ausgebildet ist, das einem Schneckengetriebe unmittelbar triebtechnisch nachgeschaltet ist, wobei ein erstes Stirnrad des Stirnradgetriebes drehfest mit dem Schneckenrad des Schneckengetriebes verbunden ist und mit einem zweiten Stirnrad in Zahneingriff steht, wobei die Rotationsachse des ersten Stirnrades nicht parallel und auch nicht senkrecht zur Grundfläche ausgerichtet ist und/oder dass die Rotationsachse des ersten Stirnrades in einem Winkel im Bereich von 60 Grad bis 95 Grad oder im Bereich 70 Grad bis 90 Grad zur Grundfläche angeordnet ist, und/oder wobei die Rotationsachse des zweiten Stirnrades nicht parallel und auch nicht senkrecht zur Richtung der Höhe ausgerichtet ist und/oder dass die Rotationsachse des ersten Stirnrades in einem Winkel im Bereich von 60 Grad bis 95 Grad oder im Bereich 70 Grad bis 90 Grad zur Grundfläche angeordnet ist.

8. Aktuator nach einem der Ansprüche 1 bis 7, **dadurch gekennzeichnet, dass**
a. wenigstens eines der Getriebe als Winkelgetriebe ausgebildet ist, oder dass
b. wenigstens eines der Getriebe als Winkelgetriebe ausgebildet ist, wobei das Winkelgetriebe einem Stirnradgetriebe unmittelbar triebtechnisch nachgeschaltet ist, oder dass
c. wenigstens eines der Getriebe als Winkelgetriebe ausgebildet ist, wobei das Winkelgetriebe einem Stirnradgetriebe unmittelbar triebtechnisch nachgeschaltet ist, und wobei ein erstes Kegelrad des Winkelgetriebes drehfest mit dem Stirnrad des Stirnradgetriebes verbunden ist und mit einem zweiten Kegelrad des Winkelgetriebes in Zahneingriff steht, oder dass
d. wenigstens eines der Getriebe als Winkelgetriebe ausgebildet ist, wobei das Winkelgetriebe einem Stirnradgetriebe unmittelbar triebtechnisch nachgeschaltet ist, und wobei ein erstes Kegelrad des Winkelgetriebes drehfest mit dem Stirnrad des Stirnradgetriebes verbunden ist und mit einem zweiten Kegelrad des Winkelgetriebes in Zahneingriff steht, und wobei die Rotationsachse des zweiten Kegelrades senkrecht zur Richtung der Höhe angeordnet ist.

9. Aktuator nach Anspruch 8, **dadurch gekennzeichnet, dass**
a. wenigstens ein weiteres der Getriebe als ein weiteres Winkelgetriebe ausgebildet ist, und/oder dass
b. wenigstens ein weiteres der Getriebe als ein weiteres Winkelgetriebe ausgebildet ist, wobei das weitere Winkelgetriebe dem Winkelgetriebe unmittelbar triebtechnisch nachgeschaltet ist, und/oder dass
c. wenigstens ein weiteres der Getriebe als ein weiteres Winkelgetriebe ausgebildet ist, wobei das weitere Winkelgetriebe dem Winkelgetriebe unmittelbar triebtechnisch nachgeschaltet ist, und wobei ein weiteres erstes Kegelrad des weiteren Winkelgetriebes drehfest mit dem zweiten Kegelrad des Winkelgetriebes verbunden ist und mit einem weiteren zweiten Kegelrad des weiteren Winkelgetriebes in Zahneingriff steht, und/oder dass
d. wenigstens ein weiteres der Getriebe als ein weiteres Winkelgetriebe ausgebildet ist, wobei das weitere Winkelgetriebe dem Winkelgetriebe unmittelbar triebtechnisch nachgeschaltet ist, und wobei ein weiteres erstes Kegelrad des weiteren Winkelgetriebes drehfest mit dem zweiten Kegelrad des Winkelgetriebes verbunden ist und mit einem weiteren zweiten Kegelrad des weiteren Winkelgetriebes in Zahneingriff steht, und wobei die Rotationsachse des weiteren zweiten Kegelrades des weiteren Winkelgetriebes senkrecht oder parallel zur Richtung der Höhe angeordnet ist.

10. Aktuator nach einem der Ansprüche 7 bis 9, **dadurch gekennzeichnet, dass**
a. wenigstens ein weiteres der Getriebe als ein weiteres Stirnradgetriebe ausgebildet ist, und/oder dass
b. wenigstens ein weiteres der Getriebe als ein weiteres Stirnradgetriebe ausgebildet ist, das dem weiteren Winkelgetriebe unmittelbar triebtechnisch nachgeschaltet ist, und/oder dass
c. wenigstens ein weiteres der Getriebe als ein weiteres Stirnradgetriebe ausgebildet ist, wobei ein weiteres erstes Stirnrad des Stirnradgetriebes drehfest mit dem weiteren zweiten Kegelrad des weiteren Winkelgetriebes verbunden ist und mit einem weiteren zweiten Stirnrad in Zahneingriff steht, und/oder dass
d. wenigstens ein weiteres der Getriebe als ein weiteres Stirnradgetriebe ausgebildet ist, wobei ein weiteres erstes Stirnrad des Stirnradgetriebes drehfest mit dem weiteren zweiten Kegelrad des weiteren Winkelgetriebes verbunden ist und mit einem weiteren zweiten Stirnrad in Zahneingriff steht, und wobei das weitere zweite Stirnrad drehfest mit der Abtriebswelle verbunden ist.

11. Aktuator nach einem der Ansprüche 1 bis 10, **dadurch gekennzeichnet, dass** der Elektromotor als Reluktanzmotor ausgebildet ist

12. Verteilersystem, insbesondere für ein Kühlsystem, **dadurch gekennzeichnet, dass** das Verteilersystem einen Aktuator nach einem der Ansprüche 1 bis 11 und ein Verteilerventil aufweist, welches von dem Aktuator gesteuert wird.

13. Kühlsystem, das einen Aktuator nach einem der Ansprüche 1 bis 11 aufweist.

14. Fahrzeug, insbesondere elektrisch angetriebenes Fahrzeug, das einen Aktuator nach einem der Ansprüche 1 bis 11 aufweist.

15. Baugruppe, insbesondere Kraftfahrzeugbaugruppe oder Verbrennungsmotor oder Fahrzeuggetriebe oder Bremse, mit einer Verstellwelle und mit einer Vorrichtung zum Antreiben der Verstellwelle, **dadurch gekennzeichnet, dass** die Vorrichtung einen Aktuator nach einem der Ansprüche 1 bis 11 aufweist.
